## Europäisches Patentamt

## European Patent Office

## Office européen des brevets

(19)

(11) Veröffentlichungsnummer: **0 080 668**
**B1**

(12) **EUROPÄISCHE PATENTSCHRIFT**

(45) Veröffentlichungstag der Patentschrift:
**19.06.85**

(51) Int. Cl.⁴: **C 09 J 3/16, C 08 G 18/16, C 08 L 75/06**

(21) Anmeldenummer: **82110690.3**

(22) Anmeldetag: **19.11.82**

(54) **Verwendung von Beschleunigern zur Polyisocyanat-Härtung und entsprechende Klebstoffe.**

(30) Priorität: **20.11.81 DE 3145991**

(43) Veröffentlichungstag der Anmeldung:
**08.06.83 Patentblatt 83/23**

(45) Bekanntmachung des Hinweises auf die Patenterteilung:
**19.06.85 Patentblatt 85/25**

(84) Benannte Vertragsstaaten:
**BE DE FR GB NL**

(56) Entgegenhaltungen:
**DE - A - 3 013 214**
**SU - A - 482 997**

(73) Patentinhaber: **Beiersdorf Aktiengesellschaft,
Unnastrasse 48, D-2000 Hamburg 20 (DE)**

(72) Erfinder: **Franzen, Kurt, Dr. Dipl.-Chem.,
Heinrich-Barth-Strasse 23, D-2000 Hamburg 13 (DE)**
Erfinder: **Knabjohann, Wolf-R.,Dr. Dipl.-Chem.,
Kirchenstrasse 56, D-2000 Schenefeld (DE)**
Erfinder: **Heldt, Heino, Apmannsweg 33,
D-2000 Norderstedt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zur Herstellung von Verbundelementen mit Deckschichten aus Aluminium, Holz, zementgebundenen Asbestplatten etc. und Kernmaterialien, wie Hartschäumen auf Kunststoff- oder Mineralbasis haben sich Polyurethan-Reaktionsklebstoffe am Markt bewährt. Man kann hierbei 2 Gruppen von derartigen Klebstoffen unterscheiden:

1. Einkomponentige, feuchtigkeitsvernetzende Polyurethane (im weiteren als EKFPU bezeichnet), die aufgrund freier Isocyanatgruppen im Stande sind, mit der auf oder in den Fügeteilen vorhandenen Feuchtigkeit zu festen Klebstoffen auszureagieren, sowie

2. Zweikomponenten-Polyurethan-Klebstoffe (im weiteren als 2K-PU bezeichnet, bestehend aus

a) einer Polyolkomponente und
b) einer Polyisocyanatkomponente,

die in einem bestimmten Mischungsverhältnis vor der Verarbeitung gemischt werden und innerhalb einer bestimmten Zeitspanne (Topfzeit) zu verarbeiten sind.

Um praxisgerecht kurze Härtungszeiten zu erhalten, ist es erforderlich, beide Klebstofftypen (vgl. Skeist, Handbook of Adhesives, 1977, Seite 452, und Ullmanns Enzyklopädie der Technischen Chemie, 1977, Band 14, Seiten 243—244) mit Härtungsbeschleunigern zu versehen. Es kommen z. B. Substanzen, wie in dem Kunststoff-Handbuch Band 7, Seite 96 ff., beschrieben, in Frage.

Der Beschleunigung bei EKFPU-Systemen sind dadurch Grenzen gesetzt, daß die Lagerstabilität, z. B. erkennbar an der Viskosität in Abhängigkeit von der Zeit, mit steigender Menge an Härtungsbeschleuniger auf nicht praxisgerechte Zeiten verkürzt wird.

Hochbeschleunigte 2K-PU-Klebstoffe werden aufgrund der kurzen Topfzeiten nur in besonderen Dosier-, Misch- und Auftragsgeräten verarbeitet. Durch die hohen Mengen durchgesetzten Klebstoffs ist in diesen Anlagen sichergestellt, daß eine Härtung innerhalb der Misch- und Auftragsvorrichtung während des Betriebes nicht auftritt. Bei Störungen und Arbeitspausen werden die Misch- und Auftragsvorrichtung mit geeigneten Lösungsmitteln durchspült. In vielen Fällen ist diese Spülvorrichtung bereits in die Anlage integriert.

Diese Notwendigkeit zum Spülen wird als schwerwiegender Nachteil angesehen, insbesondere wegen der Bereitstellung der Lösungsmittel, wegen Verlust an Klebstoff und wegen der notwendigen Vernichtung der Spülflüssigkeit, was laufende Kosten bedeutet, sowie Investitionen für Lagertanks, Vorrichtungen für Explosionsschutz und ähnliches.

Aufgabe der Erfindung war es, ein schnell reagierendes Klebstoff-System zur Verfügung zu stellen, das die Nachteile der EKFPU's und der 2K-PU's nicht oder zumindest nicht in dem Maße aufweist.

Demgemäß betrifft die Erfindung eine Lehre zum technischen Handeln gemäß den Patentansprüchen.

Erfindungsgemäß wird also aus einem normal beschleunigtem EKFPU durch Zusatz einer Beschleuniger-Lösung vor der Verarbeitung ein hochreaktiver Klebstoff hergestellt.

Der große Vorteil dieses neuen Systems liegt darin, daß es als zweikomponentiges Produkt im Vergleich zu einem gleichschnell aushärtenden 2K-PU-Klebstoff wesentlich längere Verarbeitungszeit besitzt, so daß es vorgemischt mit den üblichen Auftragsgeräten, noch günstiger und wirtschaftlicher mit den obenerwähnten Dosier-, Misch- und Auftragsanlagen verarbeitet werden kann.

Bei der erfindungsgemäß verwendeten Klebstoff-Mischung ist der Zeitraum zwischen Mischung und Verarbeitung nicht von Bedeutung. Da die Reaktion mit der Feuchtigkeit erst nach dem Auftrag des Klebstoffes auf die Fügeteile erfolgt, ist es auch in längeren Arbeitspausen nicht erforderlich, die Geräte zu spülen. Hierdurch werden Kosten vermieden und es ergibt sich ein Zeitgewinn.

Bevorzugt werden etwa 5—40, insbesondere etwa 10 Gew.-% Beschleuniger in dem Verdünner gelöst. Das Verhältnis von Polyurethan zu Verdünner mit Beschleuniger beträgt bevorzugt etwa 4 : 1 bis 25 : 1, insbesondere etwa 5 : 1 bis 12 : 1 Volumenteile. Bevorzugt setzt man als Polyurethan ein Präpolymer aus Polyesterolen mit Polyisocyanaten ein, wobei das Isocyanat bevorzugt ein Di-isocyanat mit Tri-Anteilen ist. Dieses Reaktionsprodukt hat endständige, freie Isocyanatgruppen (vgl. Kunststoffhandbuch . . .). Geeignete EKFPU's sind beispielsweise das im Handel erhältliche technicoll 8340 und technicoll 8349 der Firma Beiersdorf. Bevorzugte Beschleuniger sind Lewis-Basen, wie Amine, insbesondere tertiäre aliphatische oder aromatische Mono- oder Polyamine, bevorzugt vom Typ Dimethylbenzylamin, 1,4-Diaza-2,2,2-(bicyclooctan), als Dabco bekannt, oder Tri-(dimethylaminomethyl)-phenol, wobei diese Verbindungen gegebenenfalls weitere inerte funktionelle Gruppen tragen können, oder auch Lewis-Säuren, wie organische Zinnverbindungen, z. B. Dibutylzinndilaurat und Zinn-II-octoat (vgl. Ullmanns Enzyklopädie der technischen Chemie 1980, Band 19, Seite 306).

Der erfindungsgemäß verwendete Verdünner hat bevorzugt polare Anteile und ist relativ schwer flüchtig. Insbesondere geeignet sind Ester oder Äther, vor allem flüssige Adipinsäurepolyester oder flüssige Polyvinyläthyläther, aber auch Ester von anorganischen Säuren (vgl. Gramm/Fuchs Lösungsmittel und Weichmacher, Band 1, 1980). Geeignete Verdünner werden insbesondere nach folgenden Kriterien ausgewählt: Der Beschleuniger soll gut gelöst werden, der Verdünner soll neutral gegen den Beschleuniger sein, der Verdünner soll inert gegen das Isocyanat des EKFPU sein und soll die zu verklebenden Materialien, z. B. geschäumtes Polystyrol, nicht angreifen, der Verdünner soll auch verträglich mit dem aushärtenden Isocyanat sein, also nicht ausschwitzen und damit Schädigung der Adhäsion bewirken oder Unverträglichkeit aufweisen und damit Schädigung der inneren Festigkeit (Kohäsion) des Klebstoffilms hervorrufen, schließlich soll der Verdünner alterungsstabil und nicht feuergefährlich sein und keine besonderen Maßnahmen für den Arbeitsschutz erfordern. Unter diesen Gesichtspunkten sind die genannten bevorzugten Verdünner besonders geeignet.

Die Verwendung des Verdünners für den Beschleuniger ist für den praktischen Einsatz von großer Bedeutung, da die Beschleuniger selbst bereits in sehr geringen Mengen hochwirksam sind. Beschleuniger-Mengenangaben: Encyclopedia of Polymer Science and Technology, 1969, Volum 11, Seiten 521—526. Abmischungen zwischen dem EKFPU und unverdünntem Beschleuniger sind wegen des extremen Mischungsverhältnisses von 100 : 1 oder noch geringer mit hohen Unsicherheiten hinsichtlich der Homogenität der Mischung verbunden. Durch die Verdünnung der Beschleuniger mit Flüssigkeiten, wie dies erfindungsgemäß vorgesehen ist, sind günstige Mischungsverhältnisse sowohl für die Verarbeitung von Hand als auch für den Einsatz üblicher Dosier-, Misch- und Auftragsanlagen gegeben.

Durch Veränderung der Mischungsverhältnisse zwischen EKFPU und Beschleunigerlösung kann die Reaktivität je nach Bedarf eingestellt werden bzw. es können durch veränderte Raumtemperatur bedingte Reaktivitätsschwankungen leicht ausgeglichen werden.

Erfindungsgemäß lassen sich besonders günstig expandiertes oder verschäumtes Polystyrol verkleben, wie dies einleitend ausgeführt wurde.

Sollte dies erforderlich sein, können den verwendeten Polyurethanen weitere übliche Zusatzstoffe zugesetzt werden, etwa Streckmittel, Alterungsschutzmittel oder dergleichen.

Neben der erfindungsgemäßen Verwendung betrifft die vorliegende Erfindung einen entsprechenden Klebstoff, nämlich einen feuchtigkeitsvernetzenden, einkomponentigen Polyurethan-Klebstoff, wie vorstehend beschrieben, enthaltend das Polyurethan gegebenenfalls zusammen mit weiteren üblichen Zusatzstoffen und eine zuzumischende Lösung eines aminischen oder metallorganischen Beschleunigers in einem inerten, verträglichen Verdünner. Dieser Klebstoff hat die oben angegebenen Vorzüge.

Im folgenden wird die Erfindung anhand von Ausführungsbeispielen erläutert. Die Warenzeichen werden als solche anerkannt.

### Beispiel 1

100 g technicoll 8340 werden mit 10 g einer 10%igen Lösung vom Dimethylbenzylamin in Adipinsäurepolyester (Ultramoll III) gemischt, auf ein Aluminiumblech aufgetragen und mit einem Polystyrolschaumblock abgedeckt.

Ein Maß für die Reaktivität ist die Zeit bis zur Verschiebefestigkeit, die in diesem Beispiel nach 8 Minuten gegeben ist. Bereits nach 10 Minuten kommt es bei Verschiebung zum Materialausriß (Polystyrol). Das System ohne Beschleuniger ist erst nach 50—70 Minuten verschiebefest. Die Verarbeitungsfähigkeit der beschleunigten Mischung ist für einen Zeitraum von etwa 3 Tagen gegeben.

Ein 2K-PU-System mit vergleichbarer Reaktivität weist Topfzeiten von ca. 3 Minuten auf.

| Viskosität | nach Herstellung | 7,6 Pa·s |
|---|---|---|
| | nach 2 h | 8,0 Pa·s |
| | nach 4 h | 9,6 Pa·s |
| | nach 24 h | 10,8 Pa·s |

### Beispiel 2

EKFPU tc 8340 und
Ultramoll III (90 Gew.-Teile)
Dabco (10 Gew.-Teile)
10 : 1 (Gew.-Teile)

nach 2 Min. verschiebefest
nach 3 Min. Materialausriß

| Viskosität | nach Herstellung | 10,0 Pa·s |
|---|---|---|
| | nach 2 h | 11,8 Pa·s |
| | nach 4 h | 13,0 Pa·s |

### Beispiel 3

EKFPU tc 8340 und
Lutonal A 25 (90 Gew.-Teile)
Dimethylbenzylamin (10 Gew.-Teile)
10 : 1 (Gew.-Teile)

nach 9 Min. verschiebefest
nach 12 Min. Materialausriß

| Viskosität | nach Herstellung | 4,8 Pa·s |
|---|---|---|
| | nach 1 h | 5,0 Pa·s |
| | nach 3 h | 5,6 Pa·s |
| | nach 24 h | 6,8 Pa·s |

### Beispiel 4

Nur EKFPU tc 8340

nach 50 Min. verschiebefest
nach 60 Min. Materialausriß

Ultramoll 3 = flüssiger Adipinsäurepolyester
Lutonal A 25 = flüssiger Polyvinylethylether

## Patentansprüche

1. Verwendung eines aminischen oder metallorganischen Beschleunigers zur Härtung von feuchtigkeitsvernetzenden, einkomponentigen Polyisocyanaten zu festen Polyurethanklebstoffen, dadurch gekennzeichnet, daß man den Beschleuniger in einem inerten, verträglichen Verdünner, der im gehärteten Klebstoff verbleibt und daraus nicht ausschwitzt, gelöst mit dem Polyisocyanat mischt, und dieses Klebstoffsystem als zweikomponentiges Produkt in einer Zweikomponenten-Anlage verwendet.

2. Verwendung nach Anspruch 1, dadurch gekennzeichnet, daß der Verdünner 5—40, insbesondere 10 Gew.-% Beschleuniger gelöst enthält.

3. Verwendung nach Anspruch 1 oder 2, dadurch gekennzeichnet, daß das Verhältnis von Polyurethan zu Verdünner mit Beschleuniger 4 : 1 bis 25 : 1, insbesondere 5 : 1 bis 12 : 1 Volumenteile beträgt.

4. Verwendung nach einem der Ansprüche 1 bis 3, dadurch gekennzeichnet, daß man Polyurethan ein Präpolymer aus Polyesterolen mit Polyisocyanaten einsetzt.

5. Verwendung nach einem der Ansprüche 1—4, dadurch gekennzeichnet, daß man als Beschleuniger ein tertiäres aliphatisches oder aromatisches Mono- oder Polyamin, insbesondere ein Di-methylbenzylamin, Tri-(dimethyl-aminomethyl)-phenol oder Mischungen davon einsetzt.

6. Verwendung nach einem der Ansprüche 1 bis 5, dadurch gekennzeichnet, daß man als Verdünner einen Ester oder Äther, insbesondere einen flüssigen Adipinsäurepolyester oder einen flüssigen Polyvinylethylether einsetzt.

7. Verwendung nach einem der Ansprüche 1 bis 6 zum Kleben von expandiertem oder verschäumtem Polystyrol.

8. Verwendung nach einem der Ansprüche 1 bis 7 in üblichen Auftragsgeräten, insbesondere in Dosier-, Misch- und/oder Auftragsanlagen.

9. Verwendung nach einem der Ansprüche 1 bis 8, wobei das Polyurethan weitere übliche Zusatzstoffe enthält.

10. Feuchtigkeitsvernetzender, einkomponentiger Polyisocyanatklebstoff, nach einem der Ansprüche 1 bis 9, enthaltend das Polyisocyanat gegebenenfalls zusammen mit weiteren üblichen Zusatzstoffen und eine diesem zuzumischende Lösung eines aminischen oder metallorganischen Beschleunigers in einem inerten, verträglichen Verdünner, der im gehärteten Klebstoff verbleibt und daraus nicht ausschwitzt.

## Claims

1. Use of an amine-type or organo-metallic accelerator for hardening moisture-crosslinking, one-component polyisocyanates to give solid polyurethane adhesives, characterised in that the accelerator, dissolved in an inert, compatible thinner which remains in the hardened adhesive and does not sweat out therefrom, is mixed with the polyisocyanate, and this adhesive system is used as a two-component product in a two-component installation.

2. Use according to Claim 1, characterised in that the thinner contains 5—40, especially 10, % by weight of accelerator dissolved therein.

3. Use according to Claim 1 or 2, characterised in that the ratio of polyurethane to thinner plus accelerator is 4 : 1 to 25 : 1, especially 5 : 1 to 12 : 1, in parts by volume.

4. Use according to one of Claims 1 to 3, characterised in that a prepolymer of polyesterols with polyisocyanates is employed as the polyurethane.

5. Use according to one of Claims 1—4, characterised in that the accelerator employed is a tertiary aliphatic or aromatic monoamine or polyamine, especially a dimethylbenzylamine, tri-(dimethylaminomethyl)-phenol or a mixture thereof.

6. Use according to one of Claims 1 to 5, characterised in that the thinner employed is an ester or ether, especially a liquid adipic acid polyester or a liquid poly(vinylethyl)ether.

7. Use according to one of Claims 1 to 6 for bonding expanded or foamed polystyrene.

8. Use according to one of Claims 1 to 7 in conventional applicator equipment, especially in metering, mixing and/or applicator installations.

9. Use according to one of Claims 1 to 8, wherein the polyurethane contains further conventional additives.

10. Moisture-crosslinking, one-component polyisocyanate adhesive, according to one of Claims 1 to 9, which contains a polyisocyanate, optionally together with further conventional additives, and a solution, to be admixed thereto, of an amine-type or organo-metallic accelerator in an inert, compatible thinner which remains in the hardened adhesive and does not sweat out therefrom.

## Revendications

1. Utilisation d'un accélérateur aminé ou organométallique pour le durcissement de polyisocyanates à un composant réticulable par l'humidité en adhésifs au polyuréthanne durcis, caractérisée en ce qu'on mélange avec le polyisocyanate, l'accélérateur dissous dans un diluant inerte compatible qui persiste dans l'adhésif durci et n'en est pas exsudé et on utilise ce système adhésif comme produit à deux constituants dans une installation pour deux constituants.

2. Utilisation suivant la revendication 1, caractérisée en ce que le diluant contient 5 à 40 et en particulier 10% en poids d'accélérateur dissous.

3. Utilisation suivant la revendication 1 ou 2, caractérisée en ce que le rapport du polyuréthanne au diluant avec l'accélérateur est de 4 : 1 à 25 : 1 et en particulier de 5 : 1 à 12 : 1 parties en volume.

4. Utilisation suivant l'une quelconque des revendications 1 à 3, caractérisée en ce qu'on utilise comme polyuréthanne, un prépolymère de polyesterols avec des polyisocyanates.

5. Utilisation suivant l'une quelconque des revendications 1 à 4, caractérisée en ce qu'on utilise comme accélérateur, une mono- ou polyamine aromatique ou aliphatique tertiaire, en particulier une diméthylbenzylamine, un tri(diméthylaminométhyl)phénol ou des mélanges de ceux-ci.

6. Utilisation suivant l'une quelconque des revendications 1 à 5, caractérisée en ce qu'on utilise comme diluant, un ester ou un éther, en particulier un polyester d'acide adipique liquide ou un éther polyvinyléthylique liquide.

7. Utilisation suivant l'une quelconque des revendications 1 à 6 pour le collage de polystyrène expansé ou mousse.

8. Utilisation suivant l'une quelconque des revendications 1 à 7 dans des appareils applicateurs classiques, en particulier des installations de dosage de mélange et/ou d'application.

9. Utilisation suivant l'une quelconque des revendications 1 à 8 dans laquelle le polyuréthanne contient d'autres additifs classiques.

10. Adhésif au polyisocyanate à un composant réticulable par l'humidité suivant l'une quelconque des revendications 1 à 9 contenant le polyisocyanate, éventuellement conjointement avec d'autres additifs classiques et une solution à mélanger à celui-ci d'un accélérateur aminé ou organométallique dans un diluant inerte compatible qui persiste dans l'adhésif durci et n'en est pas exsudé.